# EUROPEAN PATENT SPECIFICATION

(11) **EP 0 641 700 B1**
(45) Date of publication and mention of the grant of the patent: **16.12.1998**
(21) Application number: 94306588.8
(22) Date of filing: 07.09.1994
(51) Int. Cl.: B60T 13/74

(54) **Proportional control of a permanent magnet brake**
Proportionssteuerung für eine Permanentmagnetbremse
Commande proportionelle pour un frein à aimant permanent

(30) Priority: 07.09.1993 US 116976
(43) Date of publication of application: 08.03.1995
(73) Proprietor: CROWN EQUIPMENT CORPORATION, New Bremen, Ohio 45869 (US)
(72) Inventor: Dammeyer, Ned E., New Bremen, Ohio 45869 (US); Harman, John R., Versailles, Ohio 45380 (US)
(74) Representative: Murgatroyd, Susan Elizabeth

(56) References cited:
- EP-A- 0 412 786
- WO-A-83/01044
- US-A- 3 899 061
- US-A- 5 057 728
- US-A- 5 205 620
- SOVIET INVENTIONS ILLUSTRATED Section PQ, Week D23, 15 July 1981 Derwent Publications Ltd., London, GB; Class Q, AN F2986D & SU-A-765 064 (DNEPR MINING INST) 28 September 1980

## Description

This invention relates to a brake control apparatus and particularly to a proportional control circuit for a permanent magnet brake of the type wherein a permanent magnet creates a magnetic flux path for applying braking force and an electromagnet provides a continuously variable magnetic flux in opposition to the permanent magnet. This invention has particular application to wheeled vehicles such as materials handling vehicles.

The brakes of many materials handling vehicles are spring applied and are released by the application of either hydraulic pressure or by means of an electric solenoid in opposition to the force of the spring. In those brakes, the amount of braking force is controlled by the spring force applied to the brake shoes. One example of a control system for a brake of this type is shown in U.S. Patent No. 5,205,620. A materials handling vehicle, a turret stockpicker, includes brakes on the pair of load wheels which are adjusted to have one level of braking force, while brakes on the pair of steered wheels are adjusted to have a second, usually lower, level of braking force. Either pair of brakes may be applied individually or all together to provide three different levels of braking according to the vehicle speed.

Another brake is shown in U.S. Patent No. 5,057,728. Here, the brake element itself includes two sets of springs and wherein a pair of electromagnets control which spring sets are applied at any given time thereby to provide a three step control over braking force.

EP-A-0 412 786 discloses a vehicle brake controller including a variable pulse-width modulator operating at a constant frequency and with a variable pulse width to provide control pulses to a MOSFET element which actuates vehicle brakes. The controller further includes a visual indicator which displays different colours to representatively indicate the amount of current applied to the brakes, and also to indicate whether an operable connection exists between the electronic controller and the vehicle brakes.

Proportional control of braking force for spring actuated brakes is difficult because of the variable gap between the brake armature and the solenoid or electromagnetic coil acting on the armature, and also the variable forces applied by the spring to the armature. It would be desirable, however, to provide a proportional control of braking force on a material handling vehicle.

This invention relates to an electric brake control apparatus providing proportional control over braking force. Specifically, this invention may be used with brakes that are applied by means of a permanent magnet and which are released by application of electrical current to an electromagnetic coil which modifies the intensity of the magnetic flux applied to a brake armature. Such a brake is fail safe in that, upon the loss of electric current, the brake will be fully applied through the action of the permanent magnet.

An important consideration, particularly with material handling vehicles, is that this brake is fail safe. One such brake that might be used in connection with certain material handling vehicles is shown in US Patent No 3 899 061. This brake includes a permanent magnet for applying braking force and an electromagnet in the flux path to disengage the brake. Since temperature affects the resistance of the electromagnet, this patent also shows a compensating circuit so that control of the brake is properly maintained.

It is therefore an object of this invention to provide a brake control apparatus for a permanent magnet brake which provides fail-safe proportional control over the braking torque generated by the brake and which may include monitoring the temperature of the electromagnet and adjusting the current to maintain the proportional control and also an anti-skid control.

Accordingly, the present invention consists in a brake control apparatus for controlling the application of braking torque to a permanent magnet brake of the type having a permanent magnet to create a magnetic flux path for applying a maximum braking torque and an electromagnet to provide a magnetic flux path in opposition to the permanent magnet to release completely said braking torque, the improvement being characterized by means for generating a braking command signal which varies continuously in relation to the amount of braking desired from zero braking to maximum braking, circuit means responsive to said braking command signal for controlling the width and/or frequency of pulses applied to said electromagnet whereby the braking torque may be controlled in direct proportion to the amount of braking torque desired, said circuit means including means for applying pulses of current to said electromagnet, means for applying a first predetermined width and/or frequency of pulses to said electromagnet when no braking torque is desired, which first predetermined width and/or frequency of pulses causes the magnetic flux produced by said permanent magnet to be counteracted by a magnetic flux of opposite polarity from said electromagnet, and means for modifying the width and/or frequency of pulses applied to said electromagnet by a continuously variable amount thereby to change the effective magnetic flux generated by said electromagnet as said braking command signal increases from zero braking until maximum braking torque is obtained, means for sensing the presence of said pulses of current to said electromagnet, and means responsive to said sensing means for removing all current to said electromagnet upon the failure of said sensing means to detect the presence of said pulses of current.

In the present invention, current to the electromagnetic coil is pulsed at a variable frequency and/or pulse width in response to a brake control signal, which is typically generated according to the position of a brake pedal or a hand grip. The brake control signal is applied to a control circuit which controls the pulses applied to the electromagnet to provide a proportional control over braking force. The current during each pulse may provide information as to the temperature of the coil of the electromagnet, and in response thereto, appropriate compensation is made. Should the control circuit fail to operate properly, the brake would be fully applied, thus failing safe. Also, the control circuit may be responsive to other vehicle control functions, or an emergency power disconnect, to apply the brakes fully.

The control circuit may monitor the speed of the wheel with which the brake is associated and an anti-skid algorithm is included in the control circuit to prevent the braking from locking up.

The invention will now be described in more detail, by way of example, with reference to the accompanying drawings, in which:-
Fig. 1 is a perspective view of a stockpicker materials handling vehicle with its access cover removed showing a single drive wheel, a steering motor, a traction motor with associated brake and control circuit according to the present invention, and electrically operated hydraulic pumps for its fork raising apparatus;
Fig. 2 is a electrical block diagram showing a control circuit of the present invention, including a microprocessor, for providing proportional control of a permanent magnet brake;
Fig. 3 is a waveform diagram showing a minimum pulse applied to the electromagnet within the brake;
Figs. 4-7 are flow charts showing the operation of the computer program which operates the microprocessor of Fig. 2; and
Fig. 8 is a graph showing the relationship between electromagnet coil current and brake torque.

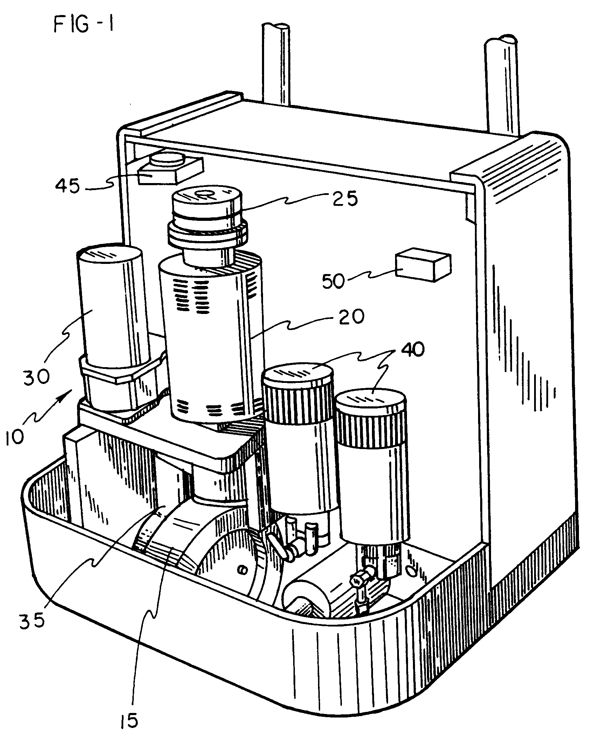

Referring now to the drawings which illustrate an embodiment of the invention, and particularly to Fig. 1, a typical materials handling vehicle 10 is shown with its access cover removed. The vehicle may be of any type but might be a rider reach truck, such as a Series RR or RD truck or a stockpicker, such as a model SP36 truck, both manufactured by Crown Equipment Company. For purposes of illustration, the truck shown in Fig. 1 includes a single steerable wheel 15, which is powered by a drive motor 20, stopped by a brake 25, and electrically steered by means of a steering motor 30. Of course, this invention could be used on four-wheeled vehicles as well. The drive motor is connected to the axle of the wheel 15 though a gear reduction mechanism 35. Also shown in Fig. 1 are a pair of motor driven hydraulic motors 40 for providing hydraulic fluid to power other vehicle devices, such as the fork lifting mechanism. An emergency disconnect switch 45 is provided within ready access by the operator for the purpose of removing battery power to all vehicle systems. Within the power compartment are the vehicle control electronic circuits, including a brake control circuit 50.

Since the brake 25 is connected to the wheel through the gear reduction mechanism 35 by way of the shaft of motor 20, the size of the brake 25 may be reduced considerably over that required of a brake that is connected directly to the wheel of the vehicle.

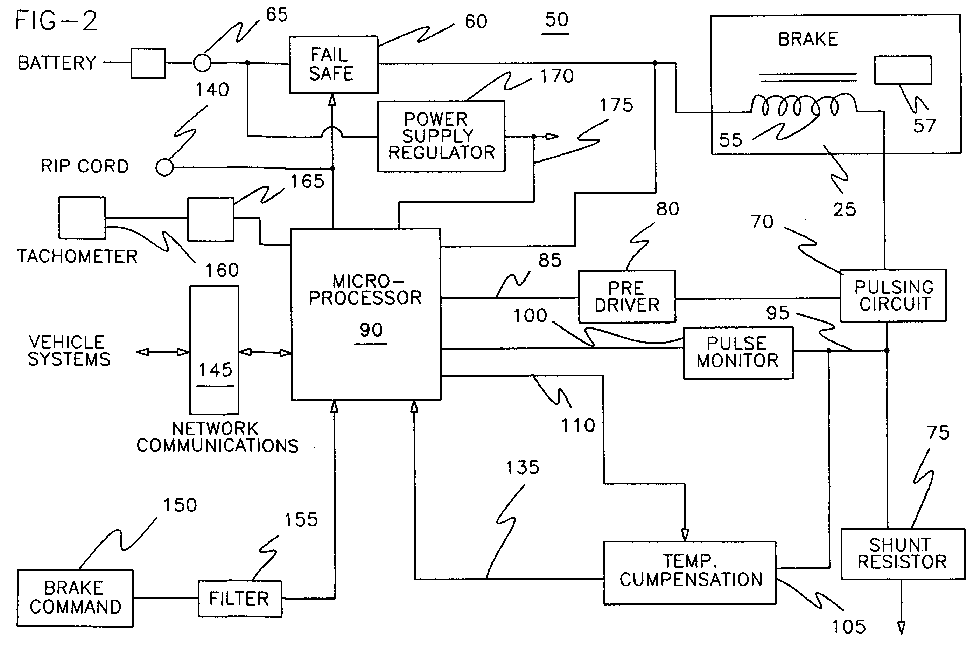

Referring now to Fig. 2, which is an electrical block diagram of the control circuit 50, one side of an electromagnetic coil 55 of brake 25 is shown connected through a fail-safe device 60 to the vehicle's battery through terminal 65 and emergency disconnect switch 45, and the other side of the coil is connected to ground through a pulse applying circuit 70 and shunt resistor 75 the electromagnetic coil 55 creates a magnetic field in opposition to the field created by a permanent magnet 57.

The pulsing applying circuit 70 is a typical power control device, such as a MOSFET, capable of handling one to ten amperes. The pulsing circuit 70 is driven by a pre-driver circuit 80 which in turn receives a pulse command signal on line 85 from microprocessor 90 which controls the frequency and duration of each pulse. The pulse command signal is typically a 5 volt pulse while the output of the pre-driver circuit 80 is 12 volts or higher.

The shunt resistor 75 is included in the circuit to provide a signal on line 95 to pulse monitor circuit 100 and temperature compensation circuit 105. Pulse monitor circuit 100 is a device that detects the presence of pulses as they are applied to the electromagnet 55. The output of the pulse monitor circuit is applied to the microprocessor 90 as an indication that a continuous stream of pulses, regardless of width, is being applied to the brake. If the stream of pulses fails for any reason, either because the current to the brake is continuous or has fallen to zero, the microprocessor with provide an output to the fail-safe circuit 60 which will remove power entirely from the electromagnet, thus causing brake torque to be applied fully.

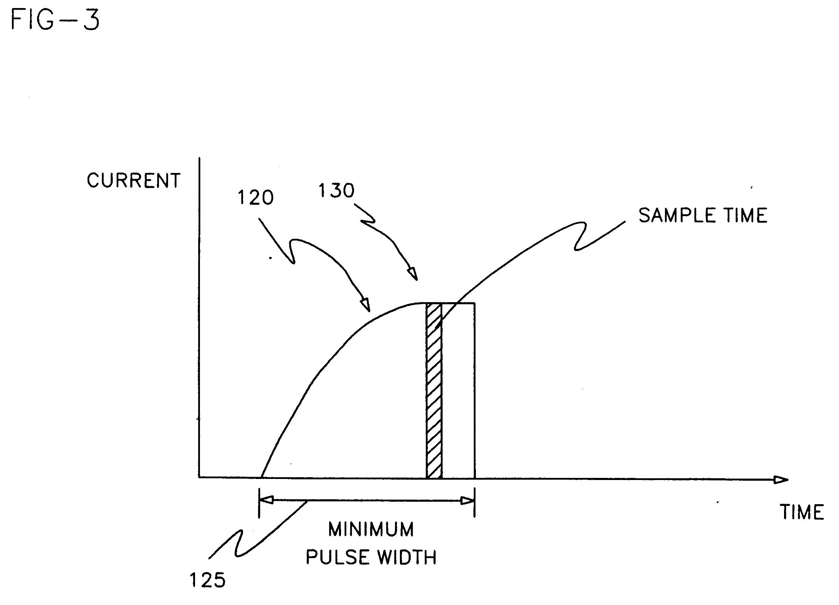

The temperature compensation circuit 105 responds to a signal on line 110 from the microprocessor 90 to monitor the actual current being applied to the coil 55. As shown in Fig. 3, each pulse 120 has a minimum pulse width 125. As current is applied to the coil 55, current initially rises slowly due to the inductive reactance of the coil, but eventually reaches substantially its full current level at 130, at which time the microprocessor generates the signal on line 110 to cause a sample of the current level then flowing to the coil to be taken. This sample current level is converted to digital form and sent to the microprocessor 90 on line 135.

The actual current flowing to the coil during the sample interval is a function of battery voltage and the resistance of the coil, which is affected by temperature. In response to the sensing of the current sample, the microprocessor 90 uses either a look up table or a formula to adjust the characteristics of the pulse 120 to compensate for changes in resistance of the electromagnet due to temperature, thus providing for proportional control of braking regardless of temperature.

The fail-safe circuit 60 may be either a relay or a P-channel MOSFET, Its purpose is either to allow full flow of current to the brake electromagnet or to cut off current flow entirely, either under the direction of the microprocessor 90 or in response to an external control signal on line 140 from a so-called Rip Cord or auxiliary control line designed to intervene directly in the full application of the brake, outside the operation of the microprocessor or any network input from the vehicle control systems to the microprocessor through a network interface 145. A signal on Rip Cord line 140 will be acted upon immediately, in real time, causing the brakes to be applied fully, and will not be delayed by the network 145 or action of the microprocessor 90. For example, the Rip Cord signal may be initiated by a watch dog program in the vehicle's control system that is monitoring the proper operation of the microprocessor 90, and upon the detection of any failure, it will cause a signal to appear on line 140 to apply the brakes in the fail safe mode.

A brake pedal or hand grip 150 provides means for generating a braking command signal in response to the amount of braking force desired, from 0% to 100% of the braking force available from the brake 25. The braking command signal is either a digital or analog signal, and it passes through filter 155 to the microprocessor 90.

A tachometer 160 is associated with the wheel 15, the motor 20 or the brake 25 to provide information on the direction of travel, speed and acceleration of the wheel under all operating conditions. The output of the tachometer is a digital signal, which also include direction of rotation information, is applied through filter 165 to the microprocessor 90.

Also shown in Fig. 2 is a power supply regulator circuit 170. A digital representation of the power supply voltage on line 175 is also applied as an input to the microprocessor 90. The power supply output is provided to the other circuits within Fig. 2 as well as other associated circuits within the vehicle.

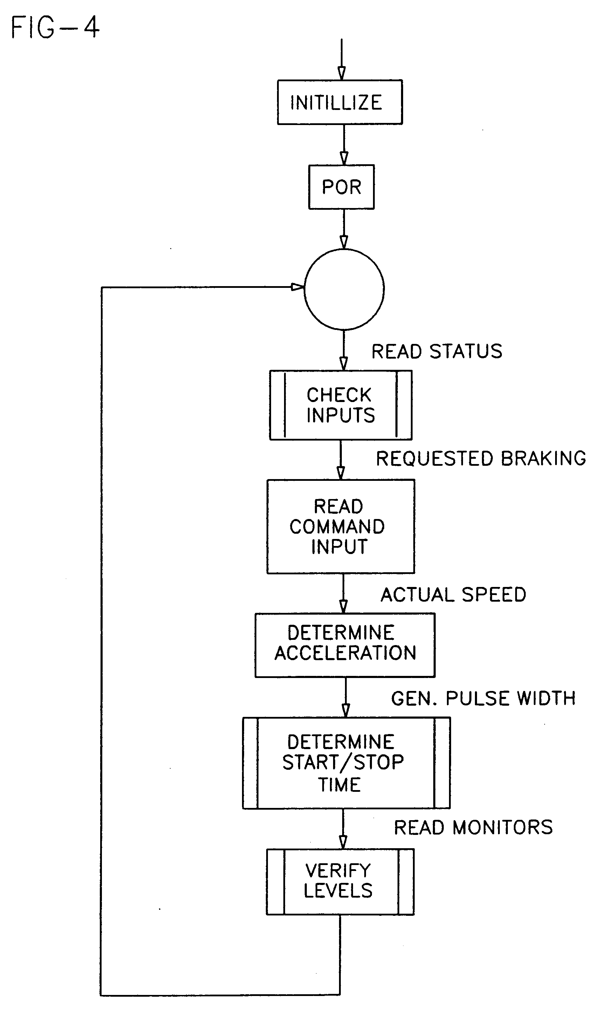

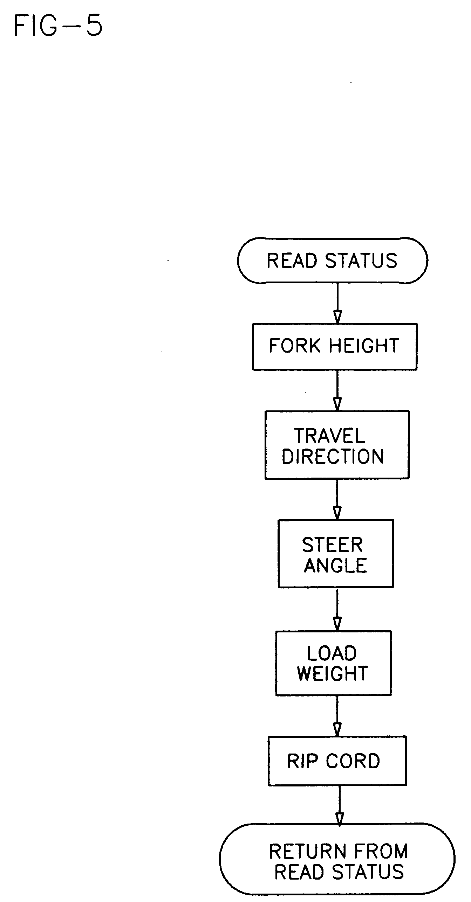

Referring now to Figs. 4-7, the brake control system is primarily microprocessor controlled. Referring first to the master flow chart of Fig. 4, after the system is initialized, a POR or Power On Reset routine is employed, then the status of all components are checked for proper operation, that is, the input levels are checked to insure they are within acceptable ranges. Fig. 5 is a flow chart showing the Read Status routine which checks the various operating conditions of the vehicle, including fork height, travel direction, steering angle, weight on the forks, and the need for a rip cord command.

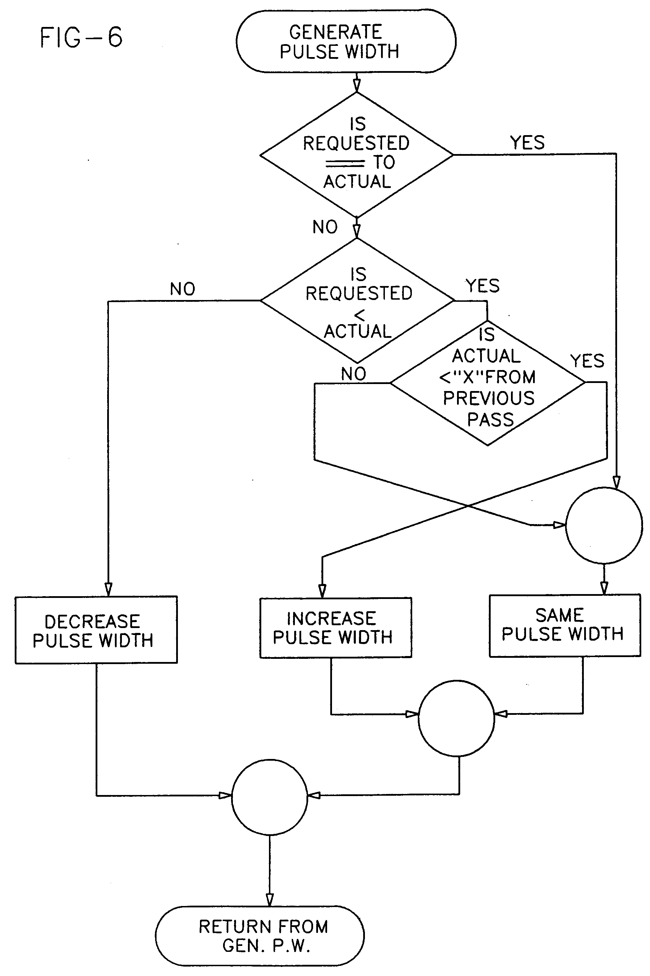

The requested braking command, from the operator controlled brake pedal or hand grip, is then compared with the actual acceleration, as monitored by reference to the wheel tachometer, and as a result, the appropriate width of the pulse applied to the brake electromagnet is generated, as shown in the flow chart of Fig. 6.

Fig. 6 also contains the anti skid routine whereby the pulse width is modified to release brake torque whenever the wheel is observed as beginning to lockup.

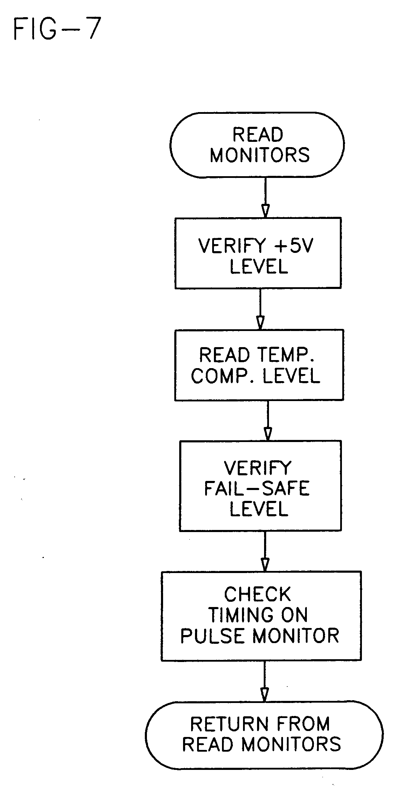

The Read Monitor routine, shown in the flow chart of Fig. 7, verifies the proper operation of the power supply, compensates for variations in temperature, verifies fail safe levels, and insures proper timing of the pulses applied to the electromagnet.

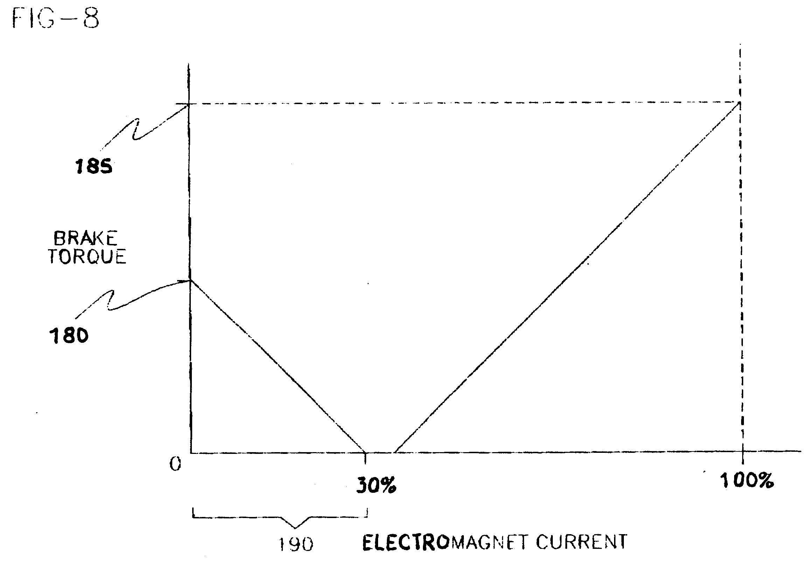

Upon receipt of a braking command signal, the microprocessor generates pulses that are sent on line 85 to the predriver circuit 80 and then to the pulsing circuit 70 to modify the magnetic force already generated by the permanent magnet within the brake itself. The pulse width is varied from a minimum width, for maximum braking to a maximum pulse width representing no braking. For example, with a 24 volt, 24 watt electromagnet in the brake, the brake would be fully released at 30% of the rated current of the electromagnet, as shown in Fig. 8. At 0% current, the brake torque 180 would be entirely applied by the permanent magnet. At 100% current, brake torque 185 would be at its maximum. In the present invention, the braking force generated in zone 190, from 0 to 30% of electromagnet current, which results from the permanent magnet alone, is sufficient to meet industry standards. Since it is desired that the brake be fail safe, removal of all current from the electromagnet should provide maximum desired or necessary braking force. Of course, if greater torque is desired, the electromagnet could be energized to its higher levels, and the invention described herein could be employed in that mode of operation as well.

While the microprocessor is controlling the pulses to control braking force, the pulse monitor 100 and temperature compensating circuit 105 are being monitored to insure that the system is operating properly and that the amount of current to the coil is being adjusted for changes in resistance due to temperature.

In summary, the present invention provides for a fail safe, proportional control over a permanent magnet brake of the type where the permanent magnet provides the braking force and where an electromagnet modifies that braking force. Full braking torque is applied by a number of systems including the brake command signal in response to the operator depressing a brake pedal, the activation of an emergency stop or disconnect button, which removes all power to the brake coil, a rip cord signal which bypasses the microprocessor and communications network, the microprocessor upon detection of a fault in any of the internal systems or upon failure to detect the regular application of pulses to the brake coil. An anti skid algorithm monitors the acceleration of the braked wheel and prevents wheel lockup.

While the form of apparatus herein described constitutes a preferred embodiment of this invention, it is to be understood that the invention is not limited to this precise form of apparatus and that changes may be made therein without departing from the scope of the invention, which is defined in the appended claims.

## Claims

1. A brake control apparatus for controlling the application of braking torque to a permanent magnet brake of the type having a permanent magnet (57) to create a magnetic flux path for applying a maximum braking torque and an electromagnet (55) to provide a magnetic flux path in opposition to the permanent magnet (57) to release completely said braking torque, the improvement being characterized by:-
means (150) for generating a braking command signal which varies continuously in relation to the amount of braking desired from zero braking to maximum braking,
circuit means responsive to said braking command signal for controlling the width and/or frequency of pulses applied to said electromagnet (55) whereby the braking torque may be controlled in direct proportion to the amount of braking torque desired, said circuit means including:-
means (70) for applying pulses of current to said electromagnet (55),
means (80,90) for applying a first predetermined width and/or frequency of pulses to said electromagnet (55) when no braking torque is desired, which first predetermined width and/or frequency of pulses causes the magnetic flux produced by said permanent magnet (57) to be counteracted by a magnetic flux of opposite polarity from said electromagnet (55), and
means (90) for modifying the width and/or frequency of pulses applied to said electromagnet (55) by a continuously variable amount thereby to change the effective magnetic flux generated by said electromagnet (55) as said braking command signal increases from zero braking until maximum braking torque is obtained,
means (100) for sensing the presence of said pulses of current to said electromagnet (55), and
means (60,90) responsive to said sensing means (100) for removing all current to said electromagnet (55) upon the failure of said sensing means (100) to detect the presence of said pulses of current.

2. An apparatus as claimed in claim 1, wherein said modifying means (90) includes means for increasing the width and/or frequency of pulses applied to said electromagnet (55) to increase the magnetic flux of a polarity opposite that of said permanent magnet (57) as said braking command signal increases from zero to maximum braking.

3. An apparatus as claimed in claim 1, wherein said modifying means (90) includes means for decreasing the width and/or frequency of pulses applied to said electromagnet (55) to decrease the magnetic flux of a polarity opposite that of said permanent magnet (57) as said braking command signal increases from zero to maximum braking, thus allowing the flux from said permanent magnet (57) to apply a continuously increasing braking torque.

4. An apparatus as claimed in claim 3, wherein said apparatus is used on a wheel (15) of a vehicle, said apparatus further including means (160) for sensing the speed of the wheel (15), anti-skid means responsive to said wheel speed sensing means (160) for controlling the application of said pulses to said electromagnet (55) for preventing the onset of wheel lockup.

5. An apparatus as claimed in claim 3, further including means (105) for sensing the magnitude of the current flowing through said electromagnet (55) during said pulses as an indication of the temperature of said electromagnet (55), and means (70,90) responsive to said current sensing means (105) for adjusting the pulse width to compensate for changes in resistance of said electromagnet (55) due to temperature.

6. An apparatus as claimed in claim 5, wherein said current sensing means (105) and said pulse width adjusting means (70,90) includes a microprocessor (90), said microprocessor (90) providing control signals for controlling the frequency and duration of said pulses and for providing a sampling pulse at a predetermined time interval after the beginning of each of said pulses, and means for monitoring the current level at said predetermined time interval after the beginning of each pulse and for providing a representation of said current level to said microprocessor (90) as an indication of the actual temperature of said electromagnet (55).

7. An apparatus as claimed in claim 6, wherein said microprocessor (90) for controlling the frequency and duration of said pulses includes an algorithm.

8. An apparatus as claimed in claim 7, further including a look-up table for modifying the frequency and duration of said pulses in response to said current sensing means (105).

9. An apparatus as claimed in claim 6, 7, or 8, wherein said apparatus includes a fail safe circuit (60) for removing current from said electromagnet (55) upon the occurrence of a stop signal on a direct communications wire or a signal from said microprocessor (90).

10. An apparatus as claimed in claim 6, 7, 8, or 9, wherein a malfunction of said microprocessor (90) will cause said brake to fully engage.

11. An apparatus as claimed in claim 6, 7, 8, or 9, wherein the absence of regular application of said pulses to said electromagnet (55) will cause said brake to fully engage.

12. An apparatus as claimed in any preceding claim, wherein the deviation of any power supply voltage beyond predetermined limits will cause said brake to fully engage.

## Patentansprüche

1. Bremssteuervorrichtung zum Steuern der Anwendung von einem Bremsdrehmoment auf eine Permanentmagnetbremse der Art, die einen Permanentmagnet (57) hat, um einen Magnetflussweg zu schaffen, um ein Maximalbremsdrehmoment anzuwenden und einen Elektromagnet (55), um einen Magnetflussweg entgegengesetzt zu dem Permanentmagneten (57) zu liefern, um das Bremsdrehmoment ganz zu entlassen, wobei die Verbesserung durch folgendes gekennzeichnet ist:-
ein Mittel (150) zum Erzeugen eines Bremsbefehlssignals, das sich kontinuierlich im Verhältnis zu der Bremsmenge verändert, die von Nullbremsung bis Maximalbremsung erwünscht ist,
ein Kreismittel, das auf das Bremsbefehlssignal reagiert, um die Breite und/oder Frequenz von Pulsen zu steuern, die auf den Elektromagnet (55) angewandt werden,
wobei das Bremsdrehmoment in einer direkten Proportion zu der erwünschten Menge des Bremsdrehmoments gesteuert werden kann, wobei das Kreismittel folgendes einschließt:-
ein Mittel (70) zum Anwenden von Strompulsen auf den Elektromagnet (55),
ein Mittel (80,90) zum Anwenden einer ersten vorbestimmten Breite und/oder Frequenz von Pulsen auf den Elektromagnet (55), wenn kein Bremsdrehmoment erwünscht ist, wobei die erste vorbestimmte Breite und/oder Frequenz von Pulsen verursacht, dass der von dem Permanentmagnet (57) hergestellte Magnetfluss von einem Magnetfluss mit entgegengesetzter Polarität von dem Elektromagnet (55) neutralisiert wird, und
ein Mittel (90) zum Modifizieren der Breite und/oder Frequenz von Pulsen um einen kontinuierlich veränderliche Menge davon, welche auf den Elektromagneten (55) angewandt werden, um dabei den effektiven Magnetfluss zu ändern, der von dem Elektromagnet (55) erzeugt wird, während sich das Bremsbefehlsssignal von Nullbremsung erhöht, bis Maximalbremsungsdrehmoment erhalten wird,
ein Mittel (100) zum Erfassen der Gegenwart der Strompulse auf dem Elektromagnet (55), und
ein Mittel (60,90), das auf das Erfassungsmittel (100) reagiert, um den ganzen Strom zu dem Elektromagnet (55) nach Versagen des Erfassungsmittels (100) zu entfernen, um die Gegenwart der Strompulse aufzufinden.

2. Vorrichtung nach Anspruch 1, in der das Modifizierungsmittel (90) ein Mittel einschließt, um die Breite und/oder Frequenz von Pulsen zu erhöhen, die auf den Elektromagnet (55) angewandt werden, um den Magnetfluss einer Polarität entgegengesetzt zu der des Permanentmagneten (57) zu erhöhen, während das Bremsbefehlssignal sich von Null- auf Maximalbremsung erhöht.

3. Vorrichtung nach Anspruch 1, in der das Modifizierungsmittel (90) ein Mittel einschließt, um die Breite und/oder Frequenz von Pulsen zu verringern, die auf den Elektromagnet (55) angewandt werden, um den Magnetfluss einer Polarität entgegengesetzt zu der des Permanentmagneten (57) zu verringern, während das Bremsbefehlssignal sich von Null- auf Maximalbremsung erhöht, was gestattet, dass der Fluss von dem Permanentmagnet (57) ein sich dauernd erhöhendes Bremsdrehmoment anwendet.

4. Vorrichtung nach Anspruch 3, in der die Vorrichtung auf einem Rad (15) eines Fahrzeugs benutzt wird, wobei die Vorrichtung weiterhin ein Mittel (160) einschließt, um die Geschwindigkeit des Rads (15) zu erfassen, ein Gleitschutzmittel, das auf das Radgeschwindigkeitserfassungsmittel (160) reagiert, um die Anwendung der Pulse auf den Elektromagnet (55) zu steuern, um den Anfang der Blockierung des Rads zu verhindern.

5. Vorrichtung nach Anspruch 3, die weiterhin ein Mittel (105) einschließt, um die Größe des Stroms zu erfassen, der während der Pulse als eine Anzeige der Temperatur des Elektromagneten (55) durch den Elektromagneten (55) strömt, und ein Mittel (70,90) das auf das Stromerfassungsmittel (105) reagiert, um die Pulsbreite einzustellen, um für Änderungen des Widerstands des Elektromagneten (55) wegen der Temperatur zu kompensieren.

6. Vorrichtung nach Anspruch 5, in der das Stromerfassungsmittel (105) und das Pulsbreiteneinstellungsmittel (70,90) einen Mikroprozessor (90) einschließt, wobei der Mikroprozessor (90) Steuersignale liefert, um die Frequenz und die Dauer der Pulse zu steuern und um einen Probenpuls zu einem vorbestimmten Zeitintervall nach dem Beginn von jedem der Pulse zu liefern, und ein Mittel zum Überwachen des Stromstands zu dem vorbestimmten Zeitintervall nach dem Beginn von jedem Puls und zum Liefern einer Darstellung des Stromstands an den Mikroprozessor (90) als eine Anzeige der tatsächlichen Temperatur des Elektromagneten (55).

7. Vorrichtung nach Anspruch 6, in der der Mikroprozessor (90) zum Steuern der Frequenz und die Dauer der Pulse einen Algorithmus einschließt.

8. Vorrichtung nach Anspruch 7, die weiterhin eine Nachschlagtabelle einschließt, um die Frequenz und die Dauer der Pulse in Reaktion auf das Stromerfassungsmittel (105) zu modifizieren.

9. Vorrichtung nach Anspruch 6, 7, oder 8, in der die Vorrichtung einen versagenssicheren Kreis (60) einschließt, um Strom von dein Elektromagnet (55) nach dem Auftreten eines Stoppsignals auf einem direkten Kommnuikationsdraht oder einem Signal von dem Mikroprozessor (90) zu entfernen.

10. Vorrichtung nach Anspruch 6, 7, 8 oder 9, in der eine Funktionsstörung des Mikroprozessors (90) verursachen wird, dass die Bremse ganz einrastet.

11. Vorrichtung nach Anspruch 6, 7, 8 oder 9, in der die Abwesenheit einer regelmäßigen Anwendung der Pulse auf den Elekromagnet (55) verursachen wird, dass die Bremse ganz einrastet.

12. Vorrichtung nach einem vorhergehenden Anspruch, in der die Abweichung von irgendeiner Leistungslieferungsspannung über vorbestimmte Grenzen hinaus verursachen wird, dass die Bremse ganz einrastet.

## Revendications

1. Commande proportionnelle de frein à aimant permanent pour commander l'application du couple de freinage à un frein à aimant permanent du modèle comportant un aimant permanent (57) de façon à appliquer un chemin de flux magnétique pour l'application d'un couple maximum de freinage ainsi qu'un électro-aimant (55) pour assurer un chemin de flux magnétique en opposition à l'aimant permanent (57) de façon à complètement libérer ledit couple de freinage, le perfectionnement **étant caractérisé par:-**
des moyens (150) générateurs de signal de commande de freinage variable en continu par rapport à la force de freinage recherchée à partir du freinage zéro jusqu'au freinage maximum,
des moyens à circuit de réponse audit signal de commande de freinage pour la régulation de la largeur et/ou de la fréquence des impulsions appliquées audit aimant permanent (55) suivant quoi le couple de freinage est réglé au besoin en proportion directe au niveau du couple de freinage recherché, ledit moyen de circuit comportant:
des moyens (70) d'application d'impulsions de courant audit aimant permanent (55),
des moyens (80,90) d'application d'une première largeur prédéterminée et/ou de fréquence d'impulsions audit aimant permanent (55) en l'absence de nécessité de couple de freinage, ladite première largeur prédéterminée et/ou de fréquence d'impulsions provoquant la contre-réaction au flux magnétique dégagé par ledit aimant permanent (57) par un flux magnétique de polarité inverse qui provient dudit électro-aimant (55), et
des moyens (90) de modification de la largeur et/ou de la fréquence des impulsions appliquées audit aimant permanent (55) d'un montant variable en continu, de telle façon à modifier le flux magnétique dégagé par ledit électro-aimant (55) au fur et à mesure que le signal de commande de freinage augmente depuis le niveau zéro jusqu'à ce que le niveau de couple maximum soit rejoint.
des moyens (100) capteurs de la présence desdites impulsions de courant audit électro-aimant (55), et
des moyens (60,90) de réponse audit moyens capteurs (100) pour éliminer tout le courant audit électro-aimant (55) suite à la défaillance desdits moyens capteurs (100) de manière à détecter la présence desdites impulsions de courant.

2. Appareil tel que revendiqué à la revendication 1, suivant laquelle lesdits moyens de modification (90) prévoient des moyens pour augmenter la largeur et/ou la fréquence des impulsions appliquées audit électro-aimant (55) de façon à augmenter le flux magnétique de polarité inverse à celle dudit aimant permanent (57) alors que ledit signal de commande de freinage augmente depuis le niveau zéro au freinage maximum.

3. Appareil tel que revendiqué à la revendication 1 suivant laquelle lesdits moyens de modification (90) prévoient des moyens pour diminuer la largeur et/ou la fréquence des impulsions appliquées audit électro-aimant (55) de façon à diminuer le flux magnétique de polarité inverse à celle dudit aimant permanent (57) alors que ledit signal de commande de freinage augmente depuis le niveau zéro au freinage maximum, permettant ainsi au flux depuis ledit aimant permanent (57) d'appliquer un couple de freinage en augmentation continue.

4. Appareil tel que revendiqué à la revendication 3 suivant laquelle ledit appareil sert sur une roue (15) du véhicule, ledit appareil comportant des moyens (160) pour capter la vitesse de la roue (15), des moyens anti-dérapants répondant audits moyens capteurs de vitesse de roue (160) pour commander l'application desdites impulsions audit électro-aimant (55) pour condamner le début de blocage de roue.

5. Appareil tel que revendiqué à la revendication 3, comportant également des moyens (105) capteurs du niveau de courant passant par ledit électro-aimant (55) lors desdites impulsions comme indication de la température dudit électro-aimant (55), et des moyens (70,90) de réponse audits moyens capteurs de courant (105) pour ajuster la largeur d'impulsion de façon à compenser les variations de résistance dudit électro-aimant (55) relevant de la température,

6. Appareil tel que revendiqué à la revendication 5 suivant laquelle les moyens capteurs de courant (105) et lesdits moyens régulateurs de largeur d'impulsion (70,90) prévoient un microprocesseur (90), ledit microprocesseur (90) apportant des signaux de commande pour ajuster la fréquence et la durée desdites impulsions et pour prévoir une impulsion d'échantillonnage selon un écart prédéterminé de durée suite au début de chacune desdites impulsions, et des moyens de surveillance du niveau de courant audit écart prédéterminé de durée suite au commencement de chaque impulsion et pour assurer audit microprocesseur (90) la représentation dudit niveau de courant comme indication de la température effective de l'électro-aimant (55).

7. Appareil tel que revendiqué à la revendication 6 suivant laquelle ledit microprocesseur (90) régulateur de fréquence et de durée desdits impulsions prévoit un algorithme.

8. Appareil tel que revendiqué à la revendication 7 comportant en outre un tableau indicateur pour la modification et la durée desdites impulsions en réponseaudits moyens capteurs de courant (105).

9. Appareil tel que revendiqué à la revendication 6, 7 ou 8 suivant laquelle ledit appareil prévoit un circuit de sécurité positive (60) pour éliminer le courant dudit électro-aimant (55) en cas de signal stop lancé sur un fil de communication directe ou d'un signal provenant dudit microprocesseur (90).

10. Appareil tel que revendiqué à la revendication 6, 7 8 ou 9 suivant laquelle une malfonction dudit microprocesseur (90) provoque l'engagement à fond dudit frein.

11. Appareil tel que revendiqué à la revendication 6, 7 8 ou 9 suivant laquelle l'absence d'application régulière desdites impulsions audit électro-aimant (55) provoque l'engagement à fond dudit frein.

12. Appareil tel que revendiqué à l'une ou l'autre des revendications précédentes, suivant laquelle la déviation de toute tension d'amenée au delà des limites prédéterminées provoque l'engagement à fond dudit frein.
